# FASCICULE DE BREVET EUROPEEN

(11) **EP 1 009 616 B1**
(45) Date de publication et mention de la délivrance du brevet: **20.08.2003**
(21) Numéro de dépôt: 98925731.6
(22) Date de dépôt: 15.05.1998
(51) Int. Cl.: B29C 49/00, A61C 7/00, A61C 13/00

(54) **PREFORME PERMETTANT L'OBTENTION APRES DEFORMATION D'APPAREILS ORTHODONTIQUES OU D'ORTHOPEDIE DENTO-FACIALE PERSONNALISES, LES APPAREILS OBTENUS, LEUR PROCEDE D'OBTENTION, ET LE NOYAU D'EXPANSION MIS EN OEUVRE DANS LEDIT PROCEDE**
VORFORMLING AUS DEM NACH EINER VERFORMUNG EINE ORTHODONTISCHE PERSONALISIERTE VORRICHTUNG ERZEUGT WIRD, ERZEUGTE VORRICHTUNG, VERFAHREN ZUR HERSTELLUNG DIESER VORRICHTUNG, UND BEI DIESEM VERFAHREN VERWENDETER AUSDEHNUNGSKERN
PREFORM FOR OBTAINING AFTER DEFORMATION CUSTOMISED ORTHODONTIC APPLIANCES OR DENTAL ORTHOPAEDICS, RESULTING APPLIANCES, METHOD FOR OBTAINING SAME, AND EXPANSION CORE USED IN THE METHOD

(30) Priorité: 15.05.1997 FR 9706082
(43) Date de publication de la demande: 21.06.2000
(73) Titulaire: Bonnet, François, 69680 Chassieu (FR); Bonnet, Maiwenn, 75014 Paris (FR); Bonnet, Bruno, 94270 Le Kremlin Bicêtre (FR)
(72) Inventeur: Bonnet, François, 69680 Chassieu (FR); Bonnet, Maiwenn, 75014 Paris (FR); Bonnet, Bruno, 94270 Le Kremlin Bicêtre (FR)
(74) Mandataire: Richebourg, Michel François
(86) Numéro de dépôt international: FR9800984
(87) Numéro de publication internationale: WO98051472

(56) Documents cités:
- DE-A- 3 610 349
- M. AMORIC: "Gouttieres orthodontiques et orthopediques thermoformees" 1993 XP002051896 cité dans la demande voir page 39 - page 50

## Description

La présente invention concerne le secteur des appareils orthodontiques ou d'orthopédie dento-faciale, en particulier ceux qui sont adaptés précisément à la morphologie spécifique de chaque patient.

Plus particulièrement, elle concerne tous les appareils orthodontiques ou d'orthopédie dento-faciale présentant une forme générale de corps creux, éventuellement ouvert d'une ou plusieurs fenêtres, et à épaisseur variable, et qui, du fait de cette géométrie particulière, ne peuvent être réalisés à partir d'une ébauche en forme de plaque plane.

De tels appareils éventuellement amovibles peuvent être ceux destinés à maintenir la langue du patient dans un volume donné, en particulier ceux de type Enveloppe Linguale Nocturne ou E.L.N. de Bonnet.

D'une façon plus générale, l'invention concerne les appareils devant nécessairement être adaptés très précisément à chaque patient ou utilisateur pour remplir leur fonction, et qui ne peuvent être fabriqués à partir d'une ébauche en forme de plaque plane en raison de leur forme finale complexe (corps creux ouvert, épaisseurs variables que l'on ne peut obtenir par simple déformation d'une plaque,...). Au contraire, ces appareils sont réalisés à partir d'une ébauche ou préforme dont la forme permet son expansion dans un moule reproduisant la morphologie du patient. Cette préforme présente une forme générale de corps tridimensionnel creux, plus particulièrement une forme tubulaire ou sensiblement tubulaire creuse, plus particulièrement encore une forme tubulaire ou sensiblement tubulaire creuse et découpée sur la partie avant supérieure pour former une ouverture.

Traditionnellement, de tels appareils sont réalisés en laboratoire, sur mesure, donc à l'unité, à partir de moules formés à partir du ou des modèles d'étude eux-mêmes formés à partir de l'empreinte ou des empreintes prises dans le cabinet du praticien par ce dernier.

Plusieurs appareils sont généralement nécessaires au cours du traitement, pour suivre l'évolution de la morphologie du patient. La nécessité de fabriquer un nouvel appareil au cours d'un traitement peut venir aussi de la nécessité de déplacer les crochets de fixation en raison d'un changement de l'environnement (par exemple, éruption des dents de 12 ans ou déplacement des dents). A chaque fois, il est nécessaire de prendre une empreinte, d'en tirer un modèle, puis un moule et de fabriquer l'appareil final.

Plus précisément, le procédé classique de fabrication est un procédé de moulage au contact. Il se déroule en 4 étapes :
- Construction du moule :
   Le praticien prend une empreinte du maxillaire et éventuellement une empreinte de mandibule de son patient, le plus souvent en alginates en raison de leurs propriétés de polymérisation rapide et de biocompatibilité. Ces empreintes servent de base à la fabrication d'un modèle en une ou deux parties le plus souvent en plâtre que l'on complète à l'aide de cires facilement collables et/ou déformables. Ceci nécessite de l'opérateur un vrai savoir-faire, intégrant coup d'oeil, dextérité et expérience. L'opérateur positionne aussi à l'aide de cire les systèmes de fixation (ou pattes ou crochets de fixation), en général des fils métalliques, qui seront ensuite surmoulés et rempliront la fonction de fixation de l'appareil terminé dans la bouche du patient, ainsi que toute autre pièce complémentaire nécessaire.
- Moulage au contact :
   On utilise une résine à deux composants, un solide en poudre et un liquide, adaptée au moulage au contact des pièces classiques d'orthodontie. On travaille par passes successives de mouillage par le liquide à l'aide de pipette et/ou pinceau et saupoudrage du solide.
   Cependant, la forme de corps creux à épaisseur variable de certains appareils comme l'E.L.N. de Bonnet entraîne des difficultés particulières de réalisation car les différentes zones de l'appareil ont des orientations et des rayons de courbures très variés. L'opérateur est donc confronté à plusieurs difficultés :
   (i) II lui faut trouver un compromis entre des passes trop liquides ou trop minces, ou de trop petite surface qu'il faut multiplier, ce qui allonge le temps opératoire, et des passes trop épaisses ou trop pâteuses qui créent des sur-épaisseurs irrégulières qu'il faudra ensuite meuler,
   (ii) II lui est difficile d'estimer ou mesurer les épaisseurs déposées pour contrôler son travail au fur et à mesure,
   (iii) Il lui faut choisir entre le moulage de toutes les passes en une seule campagne de plusieurs minutes ou dizaines de minutes suivie d'une polymérisation unique finale, ou le moulage en plusieurs campagnes très brèves d'environ une minute chacune et autant de phases de polymérisation intermédiaires en autoclave sous pression supérieure à la pression atmosphérique (sinon présence de bulles de gaz qui nuisent à l'aspect de la pièce finie). Dans le premier cas, on obtient une pièce de transparence irrégulière peu flatteuse, dans le second cas le temps de réalisation et donc le coût sont notablement plus élevés.
- Démoulage et finition
   On démoule l'ébauche, puis la finition est réalisée par usinage, meulage. La forme de l'ébauche étant assez éloignée de la pièce finale, la finition est une opération longue et délicate, qui génère du bruit et de la poussière. Ces pollutions étant incompatibles avec un cabinet d'orthodontie, la finition doit donc être réalisée dans un local et avec un équipement spécifique, notamment par exemple une hotte aspirante.
   - Il existe des variantes, dans lesquelles on utilise la partie dents et gencive du modèle de mandibule, en complément du modèle du maxillaire. On complète avec un matériau de bourrage (par exemple du plâtre) la partie manquante, afin d'obtenir un moule complet. Le moule est dans ce cas totalement externe à la pièce à mouler ; l'accessibilité et la visibilité générales sont moins mauvaises que dans la variante précédente.

L'appareil est ensuite pourvu de crochets, pour pouvoir être fixé dans la bouche du patient. Actuellement, il existe principalement deux types de crochets ou pattes ou systèmes de fixation, ci-après crochets de fixation, (Etape 1) utilisés suivant la morphologie et l'âge dentaire du patient, en général constitués de fils d'acier inoxydable orthodontique :
- les crochets latéraux (en général symétriques, au nombre de 2)
   Ils sont utilisés surtout sur les jeunes enfants. Ils sont ancrés dans l'appareil par une de leurs extrémités qui est insérée dans la paroi latérale de l'appareil, l'autre extrémité venant s'insérer élastiquement dans un diasthème pour fixer l'appareil en bouche. Ils sont généralement conformés suivant la méthode de Sahar, c'est-à-dire que le début de la partie émergée a une forme en zigzag telle qu'elle peut être déformée par le praticien pour régler le serrage de l'ancrage à la première mise en bouche et aux visites suivantes en fonction de l'évolution de l'environnement buccal du patient, et ceci sans changer l'ancrage c'est-à-dire la position de la partie du crochet incluse dans l'appareil. Un évidement est réservé dans l'épaisseur de la paroi extérieure de l'appareil pour loger ce zigzag dont la forme est changée pendant la durée de vie de l'appareil.
- les crochets arrière (en général symétriques au nombre de 2)
   Ils sont ancrés dans l'appareil de façon à ce que le fil débouche à l'arrière de l'appareil approximativement dans le plan horizontal d'occlusion. Le fil contourne ensuite en général les dents les plus en arrière (par exemple la dent de 6 ans ou la dent de 12 ans). Puis il vient appuyer extérieurement sur le tube d'une bague. Il est conformé de façon à ce que la résultante des légers efforts symétriques dirigés vers le haut et l'extérieur exercés en réaction sur l'appareil par l'appui des deux crochets arrière droit et gauche le maintiennent en position plaqué au palais.

Cette méthode de fabrication présente des inconvénients certains. En effet, les coûts de fabrication sont élevés (sur mesure), l'aspect et la qualité du produit sont souvent insuffisants (manuel), des finitions parfois importantes sont toujours nécessaires, les délais sont excessifs. De plus, l'empreinte en alginates est détruite lorsque l'on démoule le modèle en plâtre. Il faut donc éviter d'abîmer le modèle, pour ne pas mettre de nouveau le patient à contribution. Or, ce modèle en plâtre est fragile. Sa manipulation en est donc d'autant plus délicate, et demande donc d'autant plus d'attention et de temps. Enfin, le procédé génère du bruit, de la poussière et des odeurs (solvants,...).

Des tentatives de thermoformage ont été réalisées, afin de s'affranchir de certains des inconvénients liés au procédé classique. La technique de thermoformage est largement utilisée pour la réalisation d'appareils d'orthodontie. Elle est décrite dans de nombreux ouvrages généraux.

Dans le domaine de l'orthodontie, on peut citer le document DE 36 10 349, qui divulgue un procédé et un dispositif pour réaliser un appareil orthodontique. Le matériel de base se présente sous la forme d'un film plastique d'épaisseur constante, maintenu par des supports de film, auquel on fait subir, par un apport de chaleur et une dépression, une déformation jusqu'à atteindre un modèle réalisé à partir d'empreintes prises directement sur le patient. Le matériel de base dans le cadre de ce document, de par sa forme plate et d'épaisseur constante, possède une forme éloignée de la forme initiale de l'appareil orthodontique. La déformation que doit subir ce matériel entraîne des inconvénients tel le non contrôle des épaisseurs.

On peut également citer l'ouvrage de Michel AMORIC : « Gouttières orthodontiques et orthopédiques thermoformées », 1993, Editions SID. Le principe de cette technique est que l'on utilise comme matériau de base une plaque plane à épaisseur constante. A partir d'un moule, réalisé classiquement, la plaque subira des déformations afin d'obtenir un appareil de forme approprié.

Tous les appareils ne peuvent être obtenus par cette méthode. En particulier, cette méthode n'est pas efficace pour des appareils en forme de corps creux et à épaisseur variable. En effet, les étirements que la plaque doit supporter dans ces cas précis sont assez importants et donc difficile à obtenir sans déchirement. Surtout, les épaisseurs ne peuvent être contrôlées, puisqu'elles sont simplement fonction de l'allongement nécessaire pour obtenir la forme voulue, et sont donc irrégulières puisque toutes les zones ne sont pas étirées de la même façon. Cette technique n'est donc pas adaptée à un certain nombre de cas.

La variante consistant à utiliser un appareil en deux parties, c'est-à-dire deux plaques de base donnant deux demi-appareils que l'on assemble, n'est pas non plus adaptée. Elle permet de diminuer les étirements subis par les plaques, donc les risques de déchirement et les problèmes d'épaisseurs trop irrégulières, mais le problème est en partie déplacé vers l'assemblage des deux demi-appareils obtenus. En effet, la difficulté réside alors dans la précision et la solidité de l'assemblage par collage ou soudure, d'autant que l'on doit également implanter dans cette zone d'assemblage les crochets de fixation de fixation de l'appareil dans la bouche du patient.

Les méthodes de thermoformage utilisées jusqu'à aujourd'hui ne permettent donc pas de réaliser des appareils en forme de corps creux et à épaisseur variable, et les risques d'endommager le moule en plâtre unique sont importants.

L'invention permet de résoudre ces problèmes, en proposant un appareil en trois dimensions que l'on peut fabriquer en série, donc peu coûteux, appelé préforme. Cette préforme est différente d'une plaque plane et présente une forme tubulaire ou sensiblement tubulaire creuse permettant son expansion dans un moule reproduisant la morphologie du patient. Cette préforme présente, plus particulièrement une forme découpée sur la partie avant supérieure pour former une ouverture. Ladite préforme peut ensuite être adaptée parfaitement à chaque patient, dans le cabinet du praticien ou le laboratoire du prothésiste, par un procédé de déformation comprenant une expansion, facile et rapide à mettre en oeuvre, dans un moule constitué à partir du modèle en plâtre et sans risque pour ledit modèle en plâtre. Elle permet l'obtention d'un appareil fonctionnel ne pouvant être obtenu par un procédé de thermoformage classique à partir d'une plaque plane.

L'invention comprend également le procédé de transformation de ladite préforme, tel que défini dans la revendication indépendente 8, un noyau d'expansion tel que défini dans la revendication indépendante 27, qui est mis en oeuvre dans ledit procédé, et un appareil selon la revendication indépendante 29.

Le terme « opérateur » désignera la personne transformant la préforme en appareil fonctionnel, que ce soit le praticien dans son cabinet, ou le prothésiste dans son laboratoire.

Plus précisément, cette préforme est fabriquée en un matériau biocompatible puisqu'au contact direct parfois prolongé avec une cavité du corps humain. Elle doit à cet égard respecter les normes en vigueur. Elle peut être en matériau plastique de type thermodurcissable ou thermoplastique, déformable par expansion, et obtenue par exemple par injection ou tout autre procédé industriel approprié (première transformation), et présente une forme en trois dimensions telle que sa déformation permet d'obtenir facilement l'appareil final adapté à chaque patient. Cette déformation ou seconde transformation, qui comprend une expansion, est effectuée rapidement et facilement par l'opérateur, en fonction de la morphologie du patient.

Par expansion de la préforme, on entendra dans la présente description le développement ou la déformation en volume de la préforme.

Le mérite de l'invention est de s'être dégagé des inconvénients liés à la nécessaire fabrication et adaptation sur mesure d'un appareil orthodontique, en permettant la fabrication en grande série donc à faible coût d'une préforme, qui sera ensuite facilement adaptable par le praticien ou prothésiste au patient, afin d'obtenir après finitions un appareil fonctionnel en forme de corps creux et présentant des variations d'épaisseur que l'on ne pouvait pas obtenir par simple déformation d'une plaque plane et, dans certains variantes (en particulier si le matériau utilisé est thermoplastique), susceptible d'être équipé de crochets de fixation en bouche par un procédé qui permet des déplacements de l'ancrage.

Le coût de fabrication est donc inférieur, les délais sont plus courts, le procédé est propre (sans poussière ni bruit ni odeur) et simple à mettre en oeuvre, sans risque pour le modèle en plâtre, et facilite le travail de l'opérateur.

La forme de la préforme est définie en tenant compte des déformations moyennes qu'elle subira lors de la seconde transformation, par exemple diminutions variables d'épaisseur et de largeur des parois, donc en fonction de l'appareil fonctionnel que l'on souhaite obtenir. On peut donc prévoir une préforme pour tel appareil et pour des patients de telle taille ou sexe ou âge. Ainsi, on permet la fabrication en série de la préforme, tout en limitant les déformations qu'elle devra subir, donc la longueur et la complexité de la seconde transformation.

On peut également prévoir, dans une variante, que la préforme est fabriquée et livrée à l'opérateur sous forme développée à plat, donc de forme générale en deux dimensions et non plus en trois dimensions. On parle alors de préforme-développée. Un tel cas sera détaillé plus loin en référence aux figures. La préforme-développée est ensuite mise en volume, par l'opérateur, par roulage ou pliage, autour d'un gabarit approprié qui peut être un noyau à expansion contrôlée, pour constituer la préforme en tant que telle. Ainsi, on diminue le coût de fabrication, et également le volume de la préforme fabriquée en série qui est ici une préforme-développée. De plus, cette structure en deux dimensions facilite certaines manipulations par l'opérateur (aménagement d'une ouverture,...). On garde cependant la possibilité de définir l'épaisseur en chaque point de la préforme, puisque la préforme-développée peut elle-même être d'épaisseur variable suivant les zones. Le raccordement (coupe) pour reconstituer le corps creux est situé dans la zone la moins déformée pendant l'expansion, par exemple sur l'étrave du toboggan dans le cas de l'E.L.N. de Bonnet. La soudure est réalisée à la main par pression (par exemple effet autocollant, par application d'un solvant ou d'une colle adaptée au matériau de la préforme développée) de façon à ce qu'elle résiste ensuite à l'expansion.

La seconde transformation dépend de la matière plastique utilisée. Si on utilise des matières plastiques thermoplastiques, la seconde transformation pourra être réalisée par des techniques apparentées aux techniques de soufflage, thermoformage, injection-soufflage, voir même de façon mécanique, ou tout autre moyen approprié. Si on utilise des matières thermodurcissables, la seconde transformation pourra être réalisée par des techniques de type compression, moulage au sac, moulage par aspiration, préformage sur grille ou tout autre moyen approprié.

Cette seconde transformation sera effectuée par l'opérateur, c'est-à-dire par le praticien, dans son cabinet, ou par le prothésiste, dans son laboratoire, rapidement et facilement, par un procédé « propre » c'est-à-dire sans poussière ni bruit ni odeur, dans des délais très rapides et dans des conditions permettant une adaptation parfaite à la morphologie du patient.

De plus, les différents appareils nécessaires au cours du traitement en raison de l'évolution de la morphologie du patient, pourront être réalisés successivement à partir du premier appareil fabriqué à partir d'une préforme. Ainsi, le premier appareil deviendra la préforme du deuxième appareil, nécessaire quelques mois plus tard, ce deuxième appareil devenant à son tour la préforme du troisième, etc.... Les transformations seront donc rapides, puisqu'on ne repart pas de zéro à chaque fois, contrairement à ce qui se faisait jusqu'ici.

Le procédé de l'invention permet aussi de déplacer légèrement la position d'ancrage des crochets de fixation dans l'appareil au moment de la mise en bouche et/ou au cours du traitement, ce qui évite, dans certains cas, de fabriquer un nouvel appareil.

D'autres caractéristiques et avantages de l'invention seront mieux compris à la lecture de la description qui va suivre, et en se référant aux figures annexées, dans lesquelles :
- La figure 1A représente en coupe frontale (axe A-A) une préforme sans ouverture selon l'invention, adaptée pour l'obtention d'une E.L.N. de Bonnet,
- Les figure 1B et 1C représentent cette préforme respectivement en coupe sagittale (= longitudinale verticale) (axe B-B) et longitudinale horizontale (axe C-C),
- La figure 2A représente une vue de côté d'une préforme selon l'invention, pourvue d'une ouverture,
- La figure 2B représente cette préforme 2A vue de dessus,
- La figure 2C représente cette préforme 2A en perspective,
- La figure 3 représente un dispositif permettant de transformer, suivant la morphologie du patient, une préforme en appareil fonctionnel,
- La figure 4 représente une coupe en perspective d'un noyau à expansion contrôlée mis en oeuvre dans un procédé selon l'invention,
- Les figure 5A, 5B et 5C représentent le noyau de la figure 4 selon une coupe respectivement frontale, longitudinale horizontale et sagittale (longitudinale verticale),
- La figure 6 représente une préforme-développée selon l'invention,
- La figure 7 représente représente la préforme obtenue par roulage/pliage de la préforme-développée de la figure 6,
- La figure 8 (8a + 8b) représente un crochet latéral droit de Sahar inséré ou ancré dans un appareil selon l'invention (vue de l'arrière et vue de droite),
- La figure 9 (9a + 9b) représente un crochet latéral droit avant ancrage dans un appareil selon l'invention par un dispositif d'ancrage de crochet comportant deux extrémités en forme de fourchette (vue de gauche et vue de dessus),
- La figure 10 (10a + 10b + 10c) représente un crochet arrière droit à branche retour inséré ou ancré dans un appareil selon l'invention (vue de l'arrière, vue de gauche et vue de dessus).

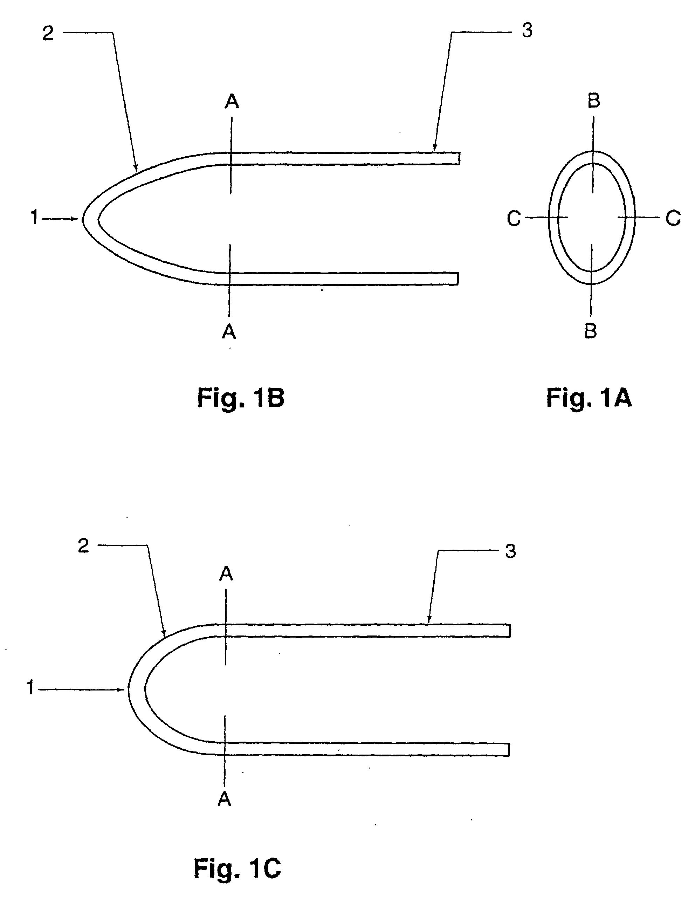

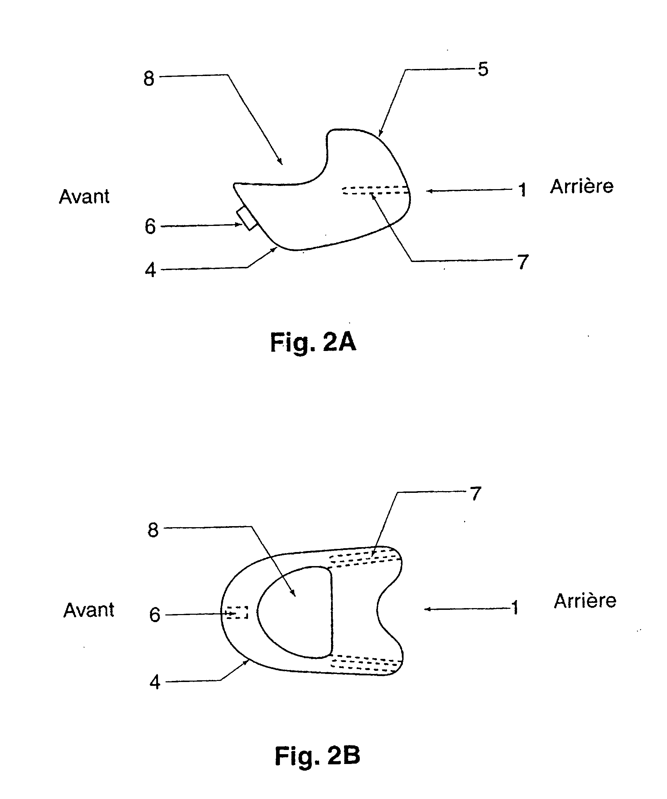

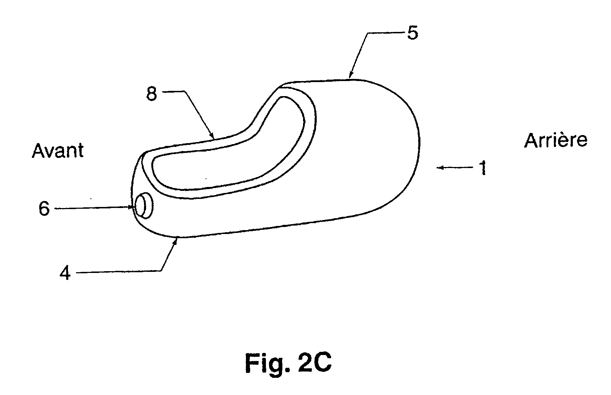

Les figures 1 et 2 décrivent des préformes (1) selon l'invention, adaptées pour l'obtention d'une E.L.N. de Bonnet.

Les préformes selon l'invention peuvent avoir des formes variables, dépendant de la fonction donc de la forme de l'appareil que l'on obtient par déformation de ladite préforme. Par ailleurs, certaines adaptations nécessaires à l'obtention d'un appareil fonctionnel peuvent être effectuées soit au stade préforme, soit pendant l'étape dite de seconde transformation, soit après cette étape. Ces adaptations peuvent se faire par découpe, usinage, soudure à chaud, ou autre procédé. D'une façon générale, la préforme présente une forme aussi proche que possible de la forme finale que l'on souhaite obtenir après déformation, afin de limiter le nombre d'opérations à effectuer par le praticien ou prothésiste tout en permettant la fabrication en grande série de la préforme de départ. Dans une variante, la préforme est pourvue d'au moins une ouverture.

Les figures 1 décrivent une préforme (1) selon l'invention, de forme sensiblement tubulaire creuse, sans ouverture, présentant une extrémité utile (2) et une extrémité non utile (3), ladite extrémité non utile étant éliminée après la seconde transformation de la préforme en appareil adapté au patient.

Les figures 2 décrivent une autre préforme (1) selon l'invention. Cette préforme est de forme sensiblement tubulaire creuse et découpée sur la partie avant supérieure pour former une ouverture (8). Cette ouverture (8) est destinée dans l'appareil final fonctionnel à permettre à la langue du patient de toucher l'avant du palais, en particulier les papilles palatines. Cette ouverture est réalisée avant la seconde transformation, mais il est également possible de ne la réaliser qu'après cette seconde transformation. La préforme peut éventuellement comprendre également une excroissance (6) destinée au calage de la préforme dans le dispositif permettant d'effectuer la seconde transformation, ainsi que des avant-trous (7) servant à loger les pattes de fixation de l'appareil fonctionnel dans la bouche. La zone (5) correspond au palais, et la zone (4) à la partie inférieure ou toboggan de l'E.L.N. de Bonnet.

Dans l'ensemble de la description, les repères dans l'espace sont donnés en référence à un appareil orthodontique ou d'orthopédie dento-faciale porté par un individu debout. Les vocables inférieur, avant, arrière,... sont ainsi explicites. Les plans de coupe sont eux aussi pris en référence à un individu portant par hypothèse l'appareil, ou par extension la préforme, voir même le noyau à expansion contrôlée défini plus loin qui a au repos la forme précise de la préforme. Une coupe frontale est une coupe dans le plan du front de cet individu, une coupe sagittale est une coupe perpendiculaire à la première dans le plan vertical (axe de symétrie vertical), enfin une coupe longitudinale horizontale est une coupe perpendiculaire à la coupe frontale mais cette fois dans le plan horizontal.

La transformation de la préforme permettra, après éventuellement adaptation (aménagement d'ouverture, d'avant-trous, fixation de pièces complémentaires, ancrage de crochets de fixation, réduction de la surface de certaines zones, évidements, polissage, etc ...), d'obtenir un appareil fonctionnel. Certaines zones de cet appareil devront être adaptées précisément à la morphologie spécifique du patient, d'autre devront respecter les formes définies par les règles de l'art de l'orthodontie en rapport avec la forme de la cavité buccale.

Dans le cas présent, la zone (5) qui correspond au palais, doit être précisément adaptée à la morphologie du patient. Par contre, la zone (4), qui correspond à la partie inférieure c'est-à-dire à la partie en retrait de la mandibule, et les zones latérales, en retrait des gencives et des dents, sont des zones définies par les règles de l'art plutôt que par la morphologie du patient.

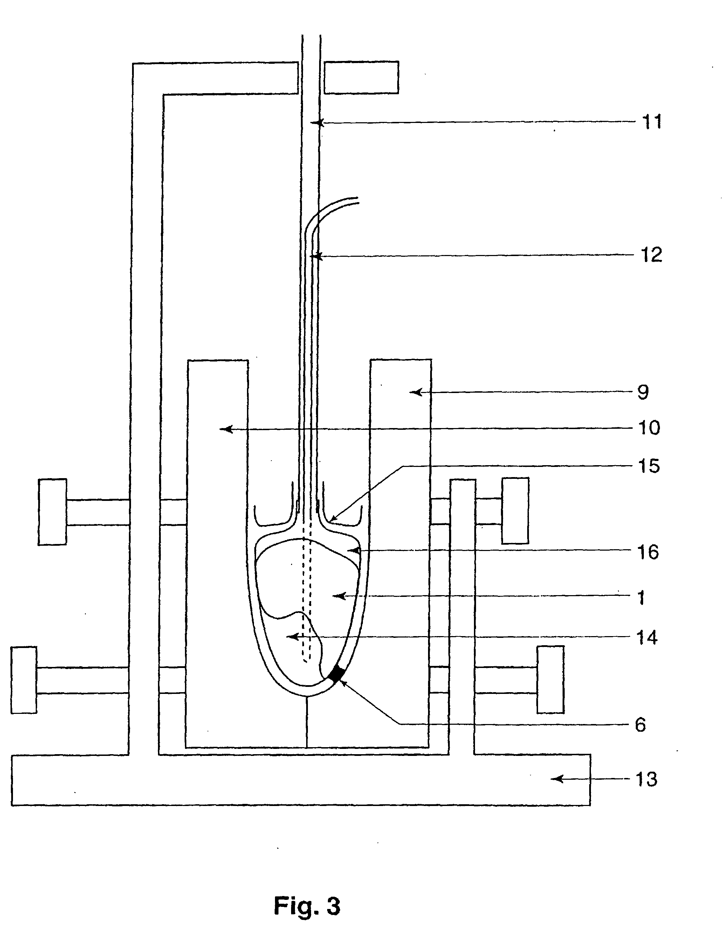

La figure 3 représente le dispositif permettant d'effectuer la seconde transformation de la préforme, de façon à obtenir un appareil fonctionnel, éventuellement après adaptation (aménagement d'une ouverture, réduction de la surface de certaines zones, ...), avant la mise en bouche par le praticien.

Ce dispositif comprend un moule d'expansion (ou système de moules d'expansion) constitué du ou des modèles (9, 10) généralement en plâtre des maxillaire et mandibule du patient. On utilise pour réaliser ces modèles en plâtre, comme matrice du ou des modèles, l'empreinte ou les empreintes réalisées par le praticien sur le patient lorsqu'il étudie le cas. Ce moule peut être complété ou modifié par des moyens mécaniques traditionnels (usinage, adjonction de pièces métalliques, de fourrure en matériau souple par exemple silicone en plaque ou en bande de largeur, longueur et épaisseur variables ajustées pour contrôler l'espace laissé libre entre l'appareil expansé et la cavité buccale du patient, ou autre) de façon à présenter dans les zones où cela est nécessaire les formes intérieures définies par les règles de l'art plutôt que par la morphologie du patient.

Les modèles en plâtre (9, 10) constituant le moule d'expansion sont maintenus solidement et précisément en position l'un par rapport à l'autre en occlusion naturelle ou dans la position relative choisie par le praticien et définie par exemple par un « mordu » sur cire ou par marquage des modèles, par un système de fixation (13), par exemple un système mécanique, de façon à constituer le moule de seconde transformation. Le système de serrage peut également remplir la fonction de support et d'orientation par rapport à la verticale de l'ensemble.

La préforme (1) est placée dans le moule d'expansion (9, 10).

Elle peut être modifiée préalablement à la seconde transformation pour lui donner une morphologie plus favorable à l'obtention de la forme finale, comme par exemple en créant une ouverture. Toutes les modifications ou adaptations pouvant être effectuées avant la seconde transformation permettront de limiter le nombre d'opérations après cette seconde transformation.

Le procédé de seconde transformation dépend du matériau utilisé pour fabriquer la préforme. Il comprend une déformation par expansion de la préforme afin d'obtenir un appareil adapté à la morphologie du patient et aux règles de l'art en matière d'orthodontie.

Plus précisément, il comprend les étapes suivantes :
- constitution d'un moule d'expansion réalisé au moins en partie à partir du ou des modèles d'étude réalisés à partir des empreintes (en général en alginate) prises par le praticien sur son patient,
- positionnement de la préforme dans le moule d'expansion,
- expansion de la préforme jusqu'à ce qu'elle ait atteint la forme voulue,
- démoulage de l'appareil obtenu qui devient fonctionnel après finitions.

Quelque soit le matériau utilisé, le procédé comprend une étape principale d'expansion de la préforme. Lorsqu'on utilise un thermodurcissable, le procédé comprend également avant démoulage une étape de polymérisation.

L'expansion peut être réalisée à chaud. Dans un procédé de ce type, on porte la préforme à la température de déformation de son matériau constitutif avant l'étape d'expansion, soit avant soit après l'étape de positionnement dans le moule d'expansion.

Il est à souligner que l'étape de portée de la préforme à température d'expansion et l'étape d'expansion ne sont pas nécessairement réalisées dans le même dispositif. On peut par exemple porter la préforme à température d'expansion dans un four, puis la déplacer dans le moule pour l'expansion.

La préforme est portée à température d'expansion par l'action d'un rayonnement (par exemple dans un four par exemple un four à infrarouge) ou d'un fluide caloporteur amené par un tube (12). Le rayonnement utilisé peut aussi être du type à micro-ondes ou à ultraviolet. Le fluide caloporteur peut par exemple être de l'eau portée à 100°C. Dans un mode de réalisation, le fluide caloporteur se confond avec le fluide d'expansion.

L'expansion peut se faire par l'intermédiaire d'un fluide d'expansion, par exemple de l'air comprimé ou de l'eau, ou encore de façon mécanique, jusqu'à ce que la préforme ait pris la forme voulue, c'est-à-dire qu'elle soit plaquée au moins en partie contre l'intérieur du moule. L'expansion peut aussi être limitée par un noyau à expansion contrôlée comme il est décrit plus loin. Dans ce cas, l'expansion sera contrôlée à la fois par le moule (dans certaines parties) et par le noyau à expansion contrôlée (dans d'autres parties).

L'expansion peut être réalisée par tout moyen permettant à la préforme de prendre la forme souhaitée. Ce moyen peut être un dispositif d'expansion par déplacement de pièces mécaniques mues par l'opérateur pendant la phase d'expansion. Dans un autre mode de réalisation, l'expansion sera réalisée par gonflage d'un noyau d'expansion (14), présentant un espace vide (17) à l'intérieur, préalablement disposé à l'intérieur de la préforme (1) et gonflé par un fluide d'expansion. Ce noyau peut être en matériau élastomère ou autre matériau résistant à la température d'expansion. Dans le cas illustré ici, le noyau est contenu en position pendant l'expansion par un bouclier de contention (15) solidaire de la canne d'arrivée du fluide d'expansion (par exemple de l'air comprimé) (11) elle-même fixée au support (13). L'extrémité de la préforme peut être maintenue en position par l'intermédiaire de l'excroissance (6) ou par une partie du noyau d'expansion (14).

Un tel noyau d'expansion peut être réalisé par injection d'élastomère résistant à la température d'expansion, comme par exemple le silicone, polyuréthanne, nitrile. La réalisation du moule d'injection relève de techniques classiques non décrites en détail ici. Par exemple, on peut envisager l'injection ou la coulée de silicone dans un moule par exemple en Plexiglas (pour une meilleure visibilité) contenant un noyau primaire en paraffine éliminé à chaud après vulcanisation à froid ou polymérisation ; ou encore par trempée avec un noyau primaire équipé de renforts c'est-à-dire sans moule. Le noyau primaire sera nécessairement fusible ou destructible afin de libérer l'espace nécessaire (17) dans le noyau d'expansion.

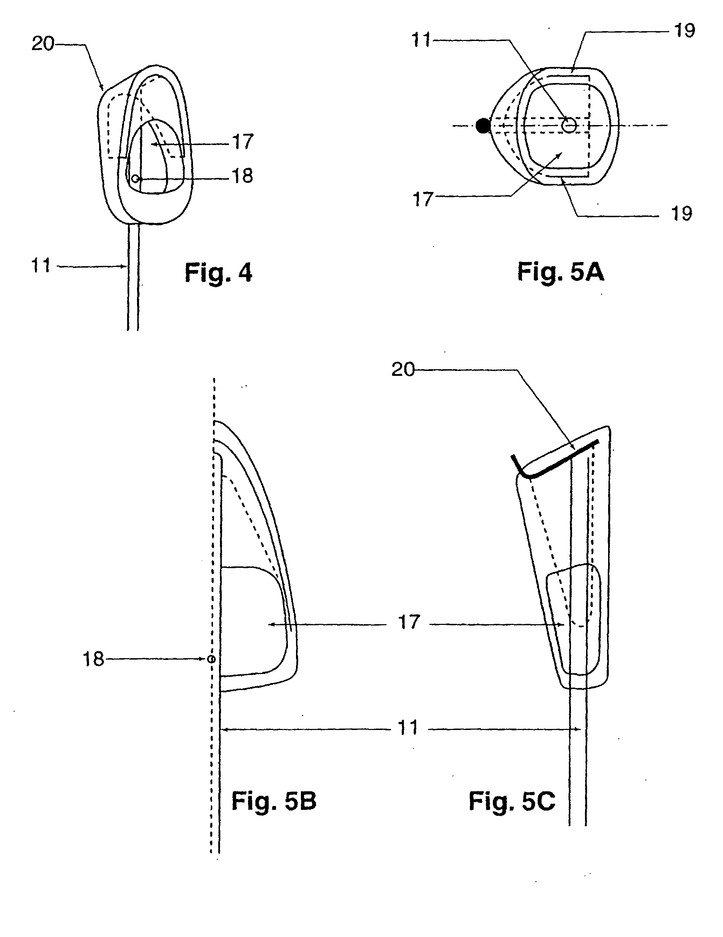

Le noyau d'expansion peut être de forme simple sphérique ou cylindrique d'épaisseur constante, mais on peut également utiliser un noyau évolué ou noyau à expansion contrôlée. Un tel noyau à expansion contrôlée est décrit en figures 4 et 5A à 5C.

Ce noyau évolué (16) comporte au moins un moyen de contrôle de son expansion, par exemple une augmentation de l'épaisseur de sa paroi dans certaines zones et/ou introduction dans sa paroi de renforts rigides par exemple métalliques.

De façon préférée, un tel noyau aura au repos la forme précise de la préforme. Il permet ainsi la préhension de cette préforme, et son déplacement et positionnement rapide au cours de la manipulation, notamment dans l'expansion à chaud, entre la portée à température d'expansion et l'expansion c'est-à-dire lorsque la préforme est chaude. La portée à température d'expansion peut donc être effectuée sur la préforme seule (hors du moule) par exemple dans un four et par exemple par rayonnement infrarouge, et peut être sélective c'est-à-dire favoriser les zones devant subir une forte expansion. Dans le cas de l'E.L.N. de Bonnet, les zones subissant les plus fortes déformations, donc celles qui seront plus chauffées, sont l'arête supérieure du toboggan et la partie arrière supérieure de l'E.L.N. de Bonnet (qui vont accoster le palais du patient).

Le noyau peut également contenir des renforts métalliques comme des feuillards ressort (19) dans certaines zones, qui permettront un meilleur contrôle des déformations subies par la préforme : on parle d'expansion contrôlée, c'est-à-dire anisotrope. L'expansion de la préforme elle-même sera donc contrôlée au moins en partie par le noyau et pas uniquement par le moule. Ainsi, le noyau pourra remplacer le moule dans les zones devant respecter les règles de l'art plutôt que la morphologie exacte du patient : dans ces zones, les renforts métalliques empêcheront certaines déformations non souhaitées. Ceci permet de simplifier les moules. L'élément (20) sert à maintenir la préforme en position lors de l'expansion.

De plus, le noyau peut contenir un tube rigide (11), par exemple en inox, percé d'un trou (18), qui permettra l'arrivée du fluide d'expansion.

Ainsi, du fait de ces différences de structure par rapport au noyau sphérique, le noyau à expansion contrôlée va avoir un rôle plus complexe que la seule expansion de la préforme.

A titre d'exemple, un noyau évolué utilisé dans l'élaboration d'une E.L.N. de Bonnet pourra présenter les particularités suivantes : forte épaisseur et renfort métallique à l'avant du toboggan, épaisseur latérale décroissante et renfort métallique élastique, tube métallique inséré, forte épaisseur arrière, faible épaisseur en haut et en bas.

Lorsque l'extrémité utile de la préforme est fermée (Fig.1), le noyau d'expansion n'est pas indispensable. L'air comprimé arrive directement dans la préforme (1) par son extrémité ouverte (3), adaptée au tube d'arrivée d'air comprimé (11) par un système de serrage par exemple de type serflex.

Lorsque la préforme est fabriquée en matériau thermodurcissable, l'expansion est accompagnée simultanément ou ultérieurement d'un facteur de déclenchement de la polymérisation, qui peut être par exempte (i) une augmentation de la température de l'ensemble moule d'expansion + préforme + éventuellement ballonnet, ou (ii) une source électromagnétique par exemple micro-ondes ou ultraviolet émis par une source disposée dans le noyau ou dans la préforme et alimentée par l'intérieur de la canne d'arrivée d'air comprimé (11).

Après l'expansion, qui permet à la préforme d'atteindre la forme voulue, et éventuellement la polymérisation, on démoule la pièce obtenue par ouverture du système de serrage. Dans le cas d'une expansion à chaud, l'ensemble est refroidi avant démoulage de la pièce pour figer la forme obtenue.

Cette pièce peut alors être finie ou usinée par tout procédé traditionnel, comme par exemple polissage, ébarbage, chauffage localisé par micro-pistolet à air chaud ou autre, afin d'obtenir un dispositif fonctionnel adapté au patient. Cette étape de finitions est plus courte que dans un procédé classique, puisque la pièce obtenue est très proche de la forme finale précisément adaptée au patient.

Dans le cas où la préforme est fermée, on aménage la ou les ouvertures dans la pièce obtenue après la seconde transformation par découpage, et on élimine les parties inutiles (fenêtre, extrémité non utile) ou on réduit la surface de certaines zones, puis on effectue les finitions comme précédemment.

On réalise finalement, si nécessaire, l'ancrage de crochets de fixation ou de toute pièce complémentaire dans les avant-trous éventuellement prévus dans la préforme, ou percés après la seconde transformation, puis collage ou soudage en position.

Comme cela est précisé ci-dessus, l'invention permet que le même appareil soit utilisé au cours du traitement du patient, en le faisant évoluer en fonction de l'évolution de la morphologie : le premier appareil fabriqué sert de préforme au deuxième, lui-même servant de préforme au troisième, et ainsi de suite. Il n'est donc plus nécessaire de fabriquer un nouvel appareil à chaque étape. En parallèle, il est indispensable de prévoir des crochets de fixation dont les points d'ancrage peuvent être déplacés au cours du temps, en fonction de l'évolution de la morphologie du patient et donc en fonction de l'évolution de l'appareil.

Un objet de l'invention est donc de proposer un appareil orthodontique obtenu par le procédé décrit, à partir de la préforme décrite, et dont les crochets de fixation comprennent des points d'ancrage déplaçables.

Dans la version de base d'un tel appareil, c'est-à-dire en utilisant un matériau thermoplastique, le meilleur procédé de fixation sera le soudage, pratiqué de l'une et/ou l'autre des façons indiquées ci-dessous.

Le soudage ou insertion à chaud des plastiques thermofusibles nécessite deux fonctions complémentaires et simultanées :
- le chauffage, qui peut être obtenu par tout moyen approprié, par exemple mécaniquement par ultrasons, ou électriquement par effet Joule, et
- la transmission de l'effort d'insertion dans l'appareil et éventuellement le positionnement mécanique de la pièce à insérer pendant le refroidissement.

Trois procédés (et leur dispositif) seront décrits ci-dessous dans la version chauffage par effet Joule qui s'applique bien aux crochets et fils d'acier inoxydable.

Dans les trois cas, le dispositif d'apport de l'énergie électrique de chauffage assure aussi le positionnement mécanique stable. L'apport d'énergie électrique peut être effectué par un générateur de courant portable tenu par la main de l'opérateur (par exemple un fer à souder instantané conçu ou réglé de façon à délivrer une intensité qui donne à la pièce à insérer la température adéquate (environ 5 ampères, 200°C)), comportant une paire de conducteurs rigides. Dans un autre mode de réalisation, il peut comprendre un dispositif appelé pistolet qui tient mécaniquement une paire de conducteurs électriques rigides reliés par des conducteurs souples à un générateur fixe. Les extrémités des conducteurs rigides sont aménagées de façon à transmettre au crochet à insérer les efforts mécaniques souhaités imprimés par l'opérateur.

Les trois dispositifs décrits se différencient par le mode de transmission des efforts mécaniques sur la pièce à chauffer et à ancrer, et donc par la forme des extrémités des conducteurs rigides.

### 1. Dispositif présentant deux extrémités en forme de fourchette ou dispositif à fourchette

L'extrémité de chaque conducteur a une forme adaptée au diamètre du fil ou à la forme de la pièce à insérer, c'est-à-dire du crochet de fixation, afin d'éviter que ledit crochet ne glisse. Cette forme assure la stabilité du point d'appui du dispositif sur la pièce à insérer malgré l'effort à transmettre. Une telle forme peut être par exemple une forme de fourchette. On désigne un tel dispositif par le terme de dispositif à fourchette.

Seul un effort de poussée peut être transmis à la pièce à insérer.

En fin d'insertion, l'opérateur cesse de pousser, le circuit électrique s'ouvre, le chauffage cesse, la pièce est libre dans le plastique fondu localement.

Le surplus de matière fondu refoulé en surface peut être enlevé ou spatulé encore chaud (par exemple par une pièce constituée par ou revêtue de PTFE ou d'un autre matériau qui ne colle pas le plastique) par l'opérateur pour améliorer la tenue mécanique et l'esthétique de l'insertion. Dans une variante, le spatulage est réalisé par un dispositif à ressort déclenché par l'opérateur éventuellement en même temps que la coupure du courant de chauffage.

Afin de contrôler le degré de liberté, et éviter l'instabilité de la pièce qui peut tourner pendant l'insertion autour de l'axe défini par les deux fourchettes, il est préférable de recourir à une action supplémentaire, par exemple en tenant l'extrémité émergée pendant l'opération.

Dans ce mode de réalisation, les zones de contact de la pièce sont donc finalement incluses et la pièce n'est plus récupérable ni déplaçable par le même procédé puisqu'aucun contact électrique n'est plus possible sans usiner l'appareil pour mettre à nu les zones de contact, et que le système ne permet pas d'exercer des efforts d'extraction.

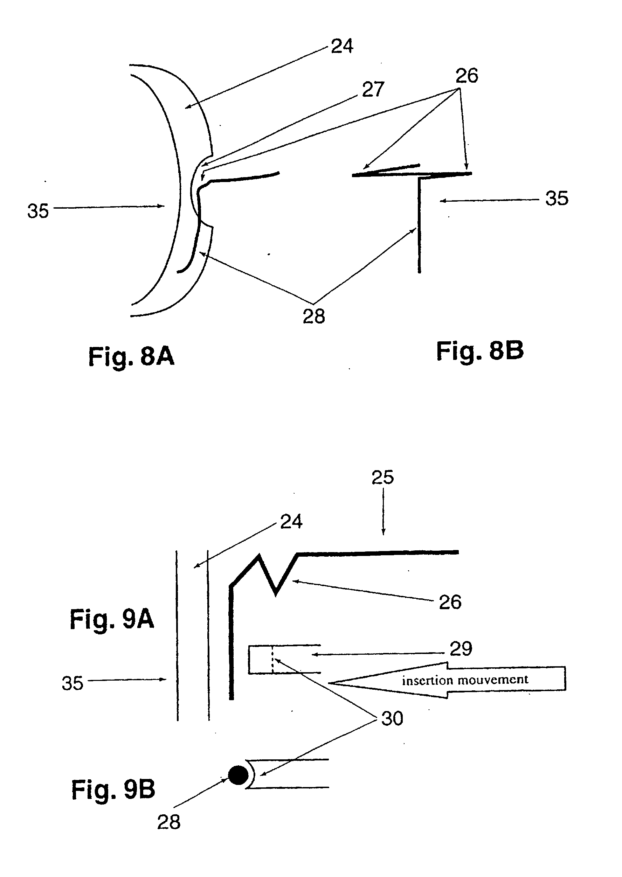

La figure 8 (8A et 8B) montre un crochet (25) latéral droit de Sahar inséré ou ancré dans un appareil (35) selon l'invention, plus précisément au niveau d'une zone latérale (24) de l'appareil proche du plan d'occlusion. Le crochet (25) comprend une branche à insérer (28) et un zigzag (26) . Ce zigzag vient s'insérer dans un évidement (27) de la zone (24) de l'appareil (35).

La figure 9 (9A et 9B) représente un crochet (25) latéral droit avant insertion ou ancrage dans la zone latérale (24) d'un appareil (35) par un dispositif d'insertion à fourchette. Dans le mode de réalisation représenté, l'extrémité de chaque conducteur (29) rigide du dispositif d'insertion a la forme d'une fourchette (30).

### 2. Dispositif comportant deux extrémités en forme de pince, la pièce à insérer (crochet de fixation) comportant une branche retour.

L'extrémité de chaque conducteur est aménagée pour pincer la pièce à insérer (par exemple au moyen d'une vis de serrage genre domino électrique, microétau à vis ou à ressort, micromandrin à trois mors, ou tout autre système mécanique). De façon complémentaire, la pièce à insérer comporte une branche retour qui reste hors de l'appareil en fin d'insertion, et les deux branches sont pincées par le dispositif. On désignera ce type de crochets par le terme « crochets à branche retour ».

En fin d'insertion, l'opérateur coupe le courant (par exemple par la gâchette du pistolet), la pièce reste tenue par le dispositif qui continue à pincer la pièce, le positionnement de la pièce peut donc être ajusté précisément dans tous le degrés de liberté pendant la phase de refroidissement.

Le surplus de matière fondue refoulée en surface peut être enlevé ou spatulé comme précédemment.

Finalement, les deux extrémités de la pièce insérée sont libérées par ouverture des pinces, et restent émergentes de l'appareil. Elles sont bien sûr conçues et/ou finies selon les moyens classiques (boucle ou boule d'extrémité) de façon à ne pas blesser ni gêner le patient.

On pourra donc ultérieurement remettre en place le pistolet, pincer la pièce pour établir le contact électrique, chauffer la pièce et la déplacer légèrement dans l'appareil. Ceci facilite le réglage de mise en bouche et le léger déplacement voir le remplacement du crochet pour le suivi ultérieur de l'évolution de la morphologie du patient.

Ces crochets à branche retour, le procédé et le dispositif correspondants sont bien adaptés aux crochets arrière puisqu'il est très utile de pouvoir les déplacer ou les remplacer durant la vie de l'appareil comme il est expliqué plus haut.

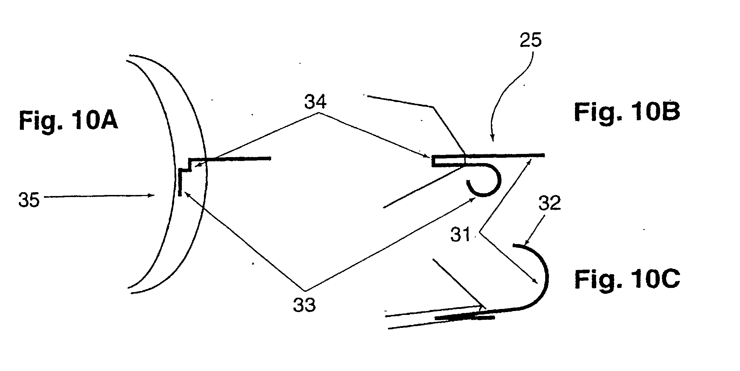

La figure 10 (10A, 10B et 10C) représente un crochet (25) arrière droit à branche retour inséré dans un appareil (35) selon l'invention, dans une partie de l'appareil dont l'épaisseur est suffisante, en général proche du plan d'occlusion. Ce crochet à banche retour comprend une branche principale (31) coutoumant les dents, une zone d'appui (32) du crochet sur les dents, ainsi qu'une branche retour (33) à extrémité formée en boucle. Entre la branche principale (31) et la branche retour (33) se trouve la zone (34) du crochet (25) qui vient s'insérer dans l'appareil (35).

### 3. Soudure mixte

Dans ce cas, chaque extrémité du dispositif est aménagée selon l'un des dispositifs ci-dessus, c'est-à-dire à fourchette et à pince. Ce procédé est en général bien adapté aux crochets latéraux de Sahar. En effet, cette configuration permet de bien maintenir la pièce à insérer par la branche pincée et d'insérer totalement l'autre branche.

Les crochets de fixation ou pièces complémentaires peuvent également être ancrés lors de la seconde transformation: c'est alors l'expansion elle-même qui crée des surmoulages d'ancrage des crochets de fixation ou pièces complémentaires.

Dans une variante, la préforme est fabriquée et livrée à l'opérateur sous forme développée, c'est-à-dire en deux dimensions. On parle de préforme-développée.

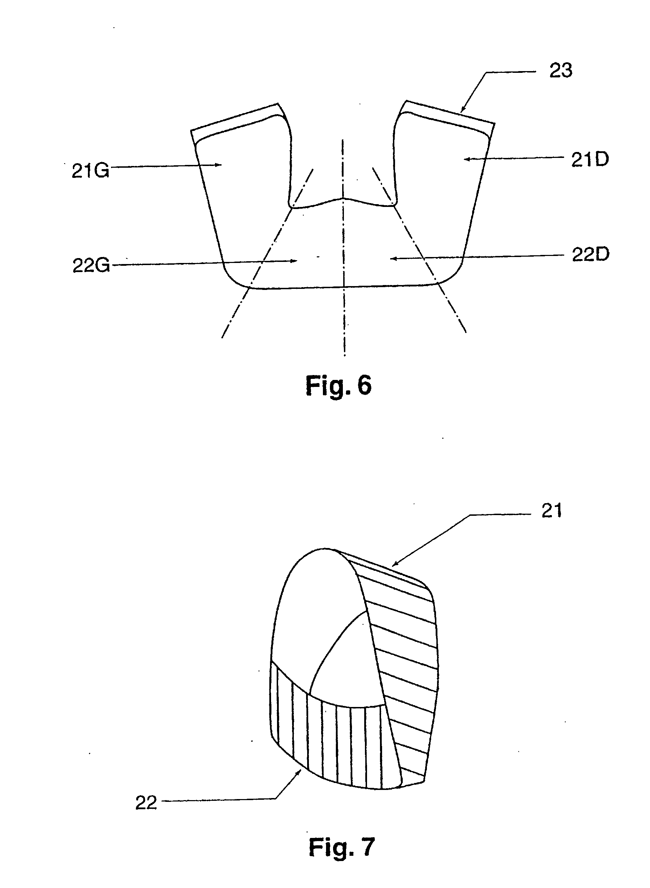

La figure 6 décrit une telle préforme-développée adaptée pour l'obtention d'une E.L.N. de Bonnet. La zone 21 est le demi-développé gauche 21G ou droit 21D du cône du toboggan, la zone 22 est le demi-développé gauche 22G ou droit 22D du palais. Les zones 23 constitueront l'étrave du toboggan. Les traits en pointillés représentent les axes de pliage droit, gauche et central (axe de symétrie).

La préforme-développée est ensuite mise en volume, par l'opérateur, pour constituer la préforme en tant que telle, représentée en figure 7. On retrouve le cône du toboggan 21 et le palais 22. Le trait pointillé représente l'axe de pliage droit. Le raccordement (coupe) pour reconstituer le corps creux est situé dans la zone la moins déformée pendant l'expansion, sur l'étrave 23 du toboggan 21 dans le cas de l'E.L.N. de Bonnet. La soudure est réalisée à la main par pression (effet autocollant) de façon à ce qu'elle résiste ensuite à l'expansion.

La présente invention concerne également les appareils orthodontiques ou d'orthopédie dento-faciale personnalisés obtenus par ledit procédé de transformation à partir de ladite préforme. Dans un cas particulier, un tel appareil constitue une Enveloppe Linguale Nocturne ou E.L.N. de Bonnet.

La présente invention couvre les différentes adaptations, applications et modes de mises en oeuvre qui peuvent être envisagés et qui sont à la portée de l'homme de métier.

Ainsi, on pourra réaliser plusieurs types de préformes, de forme et d'épaisseurs différentes, pouvant être facilement adaptés à la fonction recherchée, à la taille et à la morphologie des patients (adultes, enfants,...) et aux déformations que subira la préforme pendant le seconde transformation.

De même, les avant-trous ménagés pour recevoir des crochets de fixation lorsque cela est nécessaire peuvent être supprimés ou remplacés par d'autres dispositifs ou aménagements (par exemple empreintes) facilitant l'insertion de pièces de fixation (barres à trous ou à ergots, etc...) pendant (par surmoulage) ou après (collage, vissage, soudage, etc...) la seconde transformation.

La préforme pourra présenter en surface des moyens de guidage, par exemple des bossages ou des creux, destinés à guider l'opérateur pendant l'opération de découpe, avant ou après la seconde transformation (aménagement de la fenêtre, réduction de la surface de certaines zones,...).

Le matériau choisi pour fabriquer la préforme peut être variable. Dans le cas de matériau thermoplastique, on peut par exemple utiliser du polyéthylène, polypropylène, polyméthacrylate de méthyle, polycarbonates, PVC ou polyuréthannes ou tout autre matériau approprié. Concernant ce type de matériau thermoplastique utilisé, on peut se référer notamment à l'ouvrage de M. AMORIC cité ci-dessus. Dans le cas de matériau thermodurcissable, on pourra utiliser par exemple des polyuréthannes ou polyméthacrylate de méthyle ou tout autre matériau approprié.

On peut utiliser différentes couleurs ou charges, voir différentes saveurs, pour en rendre l'utilisation plus attractive notamment aux jeunes patients.

La préforme peut, dans certaines parties, en particulier dans les zones où la géométrie de la surface est déterminée par les règles de l'art et non par la morphologie du patient, avoir la forme définitive de l'appareil fonctionnel. Par exemple, dans le cas de l'E.L.N. de Bonnet, la partie inférieure ou toboggan a une forme proche de celle d'un tronc de cône.

Le moule d'expansion peut être constitué d'un seul modèle de maxillaire comme premier demi-moule, et par un assemblage de pièces présentant des formes standard suivant les règles de l'orthodontie ou spécifiques au patient comme second demi-moule. Le noyau à expansion contrôlée peut également jouer le rôle du moule dans certaines zones.

La mise en température de la préforme peut être réalisée par plusieurs procédés, par exemple air ou autre gaz chaud, liquide chaud, rayonnement électromagnétique (par exemple infrarouge ou micro-ondes ou ultraviolet) émis par une source externe au noyau ou interne alimentée par la canne d'arrivée d'air.

Le flux du fluide caloporteur, qui peut être le fluide d'expansion, peut être externe à la préforme et/ou interne en utilisant le tube d'arrivée de fluide et un deuxième tube intérieur au premier pour la sortie, de même pour le refroidissement après transformation.

## Revendications

1. Préforme (1) permettant l'obtention après déformation d'appareils orthodontiques ou d'orthopédie dento-faciale personnalisés, qui présente une forme tubulaire ou sensiblement tubulaire creuse permettant son expansion dans un moule reproduisant la morphologie du patient.

2. Préforme selon la revendication 1, **caractérisée en ce qu'**elle présente une forme tubulaire ou sensiblement tubulaire creuse et découpée sur la partie avant supérieure pour former une ouverture 8.

3. Préforme selon l'une quelconque des revendications 1 à 2, **caractérisée en ce qu'**elle est fabriquée en un matériau plastique de type thermoplastique ou thermodurcissable déformable par expansion.

4. Préforme selon la revendication 3, **caractérisée en ce qu'**elle est fabriquée en un matériau plastique thermoplastique choisi dans le groupe constitué du polyéthylène, polypropylène, polycarbonates, polyméthacrylate de méthyle, PVC, polyuréthannes ou en un matériau plastique thermodurcissable choisi dans le groupe constitué du polyméthacrylate de méthyle et polyuréthannes.

5. Préforme selon l'une quelconque des revendications 1 à 4, **caractérisée en ce qu'**elle présente en surface des moyens de guidage, par exemple des bossages ou des creux, destinés à guider l'opérateur pendant l'opération de découpe, et/ou des avant-trous (7) servant à loger les pates de fixation de l'appareil fonctionnel.

6. Préforme selon l'une quelconque des revendications 1 à 5, **caractérisée en ce qu'**elle est fabriquée sous forme développée à plat avant d'être mise en forme par l'opérateur.

7. Préforme selon l'une quelconque des revendications précédentes, permettant l'obtention après déformation d'une Enveloppe Linguale Nocturne ou E.L.N. de Bonnet.

8. Procédé de fabrication d'un appareil orthodontique ou d'orthopédie dento-faciale personnalisé qui comprend les étapes suivantes :
- constitution d'un moule d'expansion (9, 10) réalisé au moins en partie à partir du ou des modèles d'étude réalisés par le praticien à partir de l'empreinte ou des empreintes prise sur son patient,
- positionnement de la préforme (1) selon l'une quelconque des revendications 1 à 7 dans le moule d'expansion,
- expansion de la préforme jusqu'à ce qu'elle ait atteint la forme voulue,
- démoulage de l'appareil obtenu qui devient fonctionnel après finitions.

9. Procédé selon la revendication 8, **caractérisé en ce que** l'expansion se fait à chaud et **en ce que** l'on porte la préforme à la température de déformation de son matériau constitutif avant l'étape d'expansion, soit avant soit après l'étape de positionnement dans le moule d'expansion.

10. Procédé selon la revendication 9, **caractérisé en ce que** la portée à température d'expansion est réalisée par l'action d'un rayonnement ou d'un fluide caloporteur.

11. Procédé selon la revendication 10, **caractérisé en ce que** le rayonnement utilisé est du type micro-ondes ou à ultraviolet ou à infrarouge.

12. Procédé selon l'une quelconque des revendications 8 à 11, **caractérisé en ce que** l'expansion est réalisée par tout moyen approprié pour obtenir l'expansion de la préforme à la forme souhaitée.

13. Procédé selon la revendication 12, **caractérisé en ce que** l'expansion est réalisée par l'action d'un fluide d'expansion ou de façon mécanique.

14. Procédé selon la revendication 13, **caractérisé en ce que** le fluide d'expansion est de l'air comprimé ou de l'eau.

15. Procédé selon l'une quelconque des revendications 8 à 14, **caractérisé en ce que** l'expansion est réalisée par l'intermédiaire d'un noyau d'expansion (14) placé dans la préforme (1) et gonflé par le fluide d'expansion.

16. Procédé selon la revendication 15, **caractérisé en ce que** le noyau est à expansion contrôlée (16).

17. Procédé selon la revendication 15 ou 16, **caractérisé en ce que** le noyau d'expansion (14, 16) est en un matériau résistant à la température d'expansion par exemple en un matériau élastomère.

18. Procédé selon l'une quelconque des revendications 8 à 17, **caractérisé en ce que** la préforme est en matériau thermodurcissable et **en ce que** l'étape d'expansion est accompagnée simultanément ou ultérieurement d'une étape de polymérisation du matériau thermodurcissable.

19. Procédé selon l'une quelconque des revendications 8 à 18, **caractérisé en ce qu'**il comprend de plus, pendant l'expansion, l'insertion par surmoulage de pièces de fixation ou pièces complémentaires.

20. Procédé selon l'une quelconque des revendications 8 à 19, **caractérisé en ce que** l'étape de finitions comprend l'une au moins des actions suivantes : aménagement d'une ou de plusieurs ouvertures, polissage, ancrage de crochets de fixation, fixation de pièce complémentaire, élimination des parties inutiles, réduction de la surface de certaines zones.

21. Procédé selon l'une quelconque des revendications 8 à 20, **caractérisé en ce qu'**il comprend une étape d'ancrage de crochets de fixation à points d'ancrage déplaçables.

22. Procédé selon l'une quelconque des revendications 8 à 21, **caractérisé en ce que** l'on utilise comme préforme l'appareil orthodontique ou d'orthopédie dento-faciale obtenu par le procédé lors d'un cycle précédent.

23. Procédé selon l'une quelconque des revendications 8 à 22, **caractérisé en ce que** l'appareil orthodontique ou d'orthopédie dento-faciale personnalisé obtenu est une Enveloppe Linguale Nocturne ou E.L.N. de Bonnet.

24. Procédé selon la revendication 21, **caractérisé en ce que** les crochets de fixation sont ancrés sur un appareil orthodontique ou d'orthopédie dento-faciale fabriqué selon le procédé décrit dans les revendications 8 à 23, au moyen d'un dispositif d'apport d'énergie électrique de chauffage et de positionnement mécanique stable du crochet de fixation à ancrer.

25. Procédé selon la revendication 24, **caractérisé en ce que** l'apport d'énergie électrique est effectué soit par un générateur de courant portable tenu par la main de l'opérateur et comportant deux conducteurs électriques rigides, soit par un pistolet tenant mécaniquement une paire de conducteurs électriques rigides reliés par des conducteurs souples à un générateur fixe.

26. Procédé selon la revendication 24 ou 25, **caractérisé en ce que** le positionnement mécanique stable est effectué par les extrémités des conducteurs électriques qui présentent une forme de pince, ou une forme adaptée au diamètre du fil ou à la forme du crochet à insérer par exemple une forme de fourchette.

27. Noyau d'expansion qui est mis en oeuvre dans un procédé selon l'une quelconque des revendications 15 à 26, et qui comporte au moins un moyen de contrôle de son expansion.

28. Noyau selon la revendication 27, **caractérisé en ce que** le moyen de contrôle de son expansion est choisi parmi les moyens suivants, à savoir une augmentation de l'épaisseur de sa paroi dans certaines zones et l'introduction dans sa paroi de renforts rigides par exemple métalliques.

29. Appareil orthodontique ou d'orthopédie dento-faciale personnalisé tel que fabriqué à partir d'une préforme (1) selon l'une quelconque des revendications 1 à 7 par l'intermédiaire d'un procédé selon l'une quelconque des revendications 8 à 26.

30. Appareil orthodontique ou d'orthopédie dento-faciale selon la revendication 29, **caractérisé en ce qu'**il constitue une Enveloppe Linguale Nocturne ou E.L.N. de Bonnet.

31. Appareil orthodontique ou d'orthopédie dento-faciale personnalisé selon l'une quelconque des revendications 29 ou 30, **caractérisé en ce qu'**il comporte un ou plusieurs crochets de fixation, et **en ce que** les crochets de fixation comportent une branche dite branche retour qui reste hors de l'appareil en fin d'insertion.

32. Appareil orthodontique ou d'orthopédie dento-faciale selon la revendication 31, **caractérisé en ce que** les crochets de fixation comprennent des points d'ancrage déplaçables.

## Patentansprüche

1. Vorformling (1) aus dem nach Verformung personalisierte orthodontische oder dentofazial-orthopädische Vorrichtungen erzeugt werden können und dessen Form, die hohl und röhrenförmig oder im Wesentlichen röhrenförmig ist, seine Expansion bzw. Ausdehnung in einer die Morphologie des Patienten reproduzierenden Formeinrichtung ermöglicht.

2. Vorformling nach Anspruch 1, **dadurch gekennzeichnet, dass** er von hohler, röhrenförmiger oder im Wesentlichen röhrenförmiger Form ist und in seinem vorderen oberen Teil ausgeschnitten ist, um eine Öffnung (8) zu bilden.

3. Vorformling nach einem der Ansprüche 1 und 2, **dadurch gekennzeichnet, dass** er aus einem Kunststoffmaterial des thermoplastischen oder des wärmeaushärtenden, durch Expansion bzw. Ausdehnung verformbaren Typs ist.

4. Vorformling nach Anspruch 3, **dadurch gekennzeichnet, dass** er aus einem thermoplastischen Kunststoffmaterial hergestellt wird, das ausgewählt wird aus der Gruppe, die Polyethylen, Polypropylen, Polycarbonate, Methylpolymethacrylat, PVC, Polyurethane enthält, oder hergestellt wird aus einem wärmeaushärtenden Kunststoffmaterial, ausgewählt aus der Gruppe, die durch Methylpolymethacrylat und Polyurethane gebildet wird.

5. Vorformling nach einem der Ansprüche 1 bis 4, **dadurch gekennzeichnet, dass** er an der Oberfläche Führungseinrichtungen umfasst, zum Beispiel Erhöhungen oder Vertiefungen, die dazu dienen, den Operator während der Ausschneidoperation zu führen, und/oder Vorlöcher (7), die dazu bestimmt sind, die Befestigungspasten der im Einsatz befindlichen Vorrichtung aufzunehmen.

6. Vorformling nach einem der Ansprüche 1 bis 5, **dadurch gekennzeichnet, dass** er mit flach entwickelter Form hergestellt wird, ehe er durch den Operator in Form gebracht wird.

7. Vorformling nach einem der vorangehenden Ansprüche, der ermöglicht, nach Verformung eine Nacht-Zungenhülle oder E.L.N. (Enveloppe Linguale Nocturne) von Bonnet zu erzeugen.

8. Verfahren zur Erzeugung einer personalisierten orthodontischen oder dentofazial-orthopädischen Vorrichtung, das die folgenden Schritte umfasst:
- Herstellen einer Expansionsform (9, 10), wenigstens teilweise realisiert aufgrund von einem oder mehreren Versuchs- bzw. Untersuchungsmodellen, realisiert aufgrund des Abdrucks oder der Abdrücke, die der Arzt bzw. Zahnarzt bei seinem Patienten vorgenommen hat,
- Positionieren des Vorformlings (1) nach einem der Ansprüche 1 bis 7 in der Expansionsform,
- Expansion des Vorformlings, bis er die erwünschte Form erreicht hat,
- Ausformen der erzeugten Vorrichtung, die nach Endbearbeitungen einsatzbereit ist.

9. Verfahren nach Anspruch 8, **dadurch gekennzeichnet, dass** die Expansion warm erfolgt, und dadurch, dass man den Vorformling vor dem Expansionsschritt auf die Verformungstemperatur des ihn bildenden Materials bringt, entweder vor oder nach dem Positionierungsschritt in der Expansionsform.

10. Verfahren nach Anspruch 9, **dadurch gekennzeichnet, dass** die Expansionstemperatur hergestellt wird durch die Wirkung einer Strahlung oder eines Wärmeübertragungsfluids.

11. Verfahren nach Anspruch 10, **dadurch gekennzeichnet, dass** die benutzte Strahlung eine Mikrowellen- oder Ultraviolett- oder Infrarotstrahlung ist.

12. Verfahren nach einem der Ansprüche 8 bis 11, **dadurch gekennzeichnet, dass** die Expansion durch irgendein Mittel erfolgt, das fähig ist, die Expansion des Vorformlings in die erwünschte Form zu realisieren.

13. Verfahren nach Anspruch 12, **dadurch gekennzeichnet, dass** die Expansion durch die Wirkung eines Expansionsfluids oder auf mechanische Weise erfolgt.

14. Verfahren nach Anspruch 13, **dadurch gekennzeichnet, dass** das Expansionsfluid komprimierte Luft oder Wasser ist.

15. Verfahren nach einem der Ansprüche 8 bis 14, **dadurch gekennzeichnet, dass** die Expansion mittels eines in dem Vorformling (1) angeordneten Expansionskerns (14) erfolgt, der durch das Expansionsfluid ausgedehnt wird.

16. Verfahren nach Anspruch 15, **dadurch gekennzeichnet, dass** der Kern ein Kern mit kontrollierbarer Expansion ist (16).

17. Verfahren nach Anspruch 15 oder 16, **dadurch gekennzeichnet, dass** der Expansionskern (14, 16) aus einem Expansionstemperaturresistenten Material ist, zum Beispiel aus einem ElastomerMaterial.

18. Verfahren nach einem der Ansprüche 8 bis 17, **dadurch gekennzeichnet, dass** der Vorformling aus einem wärmeaushärtenden Material ist, und dadurch, dass der Expansionsschritt gleichzeitig oder anschließend von einem Polymerisationsschritt des wärmeaushärtenden Materials begleitet wird.

19. Verfahren nach einem der Ansprüche 8 bis 18, **dadurch gekennzeichnet, dass** es außerdem, während der Expansion, das Anbringen von Befestigungstücken oder zusätzlichen Stücken durch Eingießen umfasst.

20. Verfahren nach einem der Ansprüche 8 bis 19, **dadurch gekennzeichnet, dass** der Endbearbeitungsschritt wenigstens eine der folgenden Aktionen umfasst: Anbringen von einer oder mehreren Öffnungen, Polieren, Verankern von Befestigungshaken, Befestigen zusätzlicher Stücke, Beseitigen nutzloser Teile, Reduzieren der Fläche bestimmter Zonen.

21. Verfahren nach einem der Ansprüche 8 bis 20, **dadurch gekennzeichnet, dass** es einen Schritt zur Verankerung von Befestigungshaken mit verschiebbaren Verankerungspunkten umfasst.

22. Verfahren nach einem der Ansprüche 8 bis 21, **dadurch gekennzeichnet, dass** man als Vorformling die orthodontische oder dentofazial-orthopädische Vorrichtung verwendet, die man durch das Verfahren bei einem vorhergehenden Zyklus erlangt hat.

23. Verfahren nach einem der Ansprüche 8 bis 22, **dadurch gekennzeichnet, dass** die erlangte personalisierte orthodontische oder dentofazial-orthopädische Vorrichtung eine Nacht-Zungenhülle oder E.L.N. (Enveloppe Linguale Nocturne) von Bonnet ist.

24. Verfahren nach Anspruch 21, **dadurch gekennzeichnet, dass** die Befestigungshaken in einer nach dem in den Ansprüchen 8 bis 23 beschriebenen Verfahren hergestellten orthodontischen oder dentofazial-orthopädischen Vorrichtung befestigt werden mit Hilfe einer Einrichtung zur Zuführung elektrischer Heizenergie und zur stabilen mechanischen Positionierung des zu verankernden Hakens.

25. Verfahren nach Anspruch 24, **dadurch gekennzeichnet, dass** die Zuführung elektrischer Energie entweder durch einen tragbaren Stromgenerator erfolgt, den der Operator mit der Hand hält und der zwei steife elektrische Leiter umfasst, oder durch eine Pistole, die mechanisch ein Paar steifer elektrischer Leiter hält, die durch biegsame Leiter mit einem feststehenden Generator verbunden sind.

26. Verfahren nach Anspruch 24 oder 25, **dadurch gekennzeichnet, dass** die stabile mechanische Positionierung durch die Enden der elektrischen Leiter erfolgt, die eine Zarigenform aufweisen, oder eine Form, die angepasst ist an den Durchmesser des Drahts oder an die Form des anzubringenden Hakens, zum Beispiel eine Gabelform.

27. Expansionskern, hergestellt in einem Verfahren nach einem der Ansprüche 15 bis 26, der wenigstens ein Mittel zur Kontrolle seiner Expansion umfasst.

28. Kern nach Anspruch 27, **dadurch gekennzeichnet, dass** das Mittel zur Kontrolle seiner Expansion unter folgenden Mitteln ausgewählt wird: der Zunahme der Dicke seiner Wand in bestimmten Zonen und dem Anbringen steifer, zum Beispiel metallischer Verstärkungen in seiner Wand.

29. Personalisierte orthodontische oder dentofazial-orthopädische Vorrichtung, hergestellt aus einem Vorformling (1) nach einem der Ansprüche 1 bis 7 mittels eines Verfahrens nach einem der Ansprüche 8 bis 26.

30. Orthodontische oder dentofazial-orthopädische Vorrichtung nach Anspruch 29, **dadurch gekennzeichnet, dass** sie eine Nacht-Zungenhülle oder E.L.N. (Enveloppe Linguale Nocturne) von Bonnet bildet.

31. Orthodontische oder dentofazial-orthopädische Vorrichtung nach Anspruch 29 oder 30, **dadurch gekennzeichnet, dass** sie einen oder mehrere Befestigungshaken mit verschiebbaren Verankerungspunkten umfasst.

32. Personalisierte orthodontische oder dentofazial-orthopädische Vorrichtung nach einem der Ansprüche 29 bis 31, **dadurch gekennzeichnet, dass** sie einen oder mehrere Befestigungshaken umfasst, und dadurch, dass die Befestigungshaken einen Retourzweig genannten Zweig umfassen, der am Ende des Einsetzens außerhalb der Vorrichtung bleibt.

## Claims

1. Preform (1) making it possible to obtain, after deformation, personalised orthodontic appliances or appliances for dentofacial orthopaedics, which has a tubular or substantially tubular hollow shape allowing it to expand in a mould reproducing the morphology of the patient.

2. Preform according to Claim 1, **characterised in that** it has a tubular or substantially tubular hollow shape which is also cut out on the upper front part in order to form an opening 8.

3. Preform according to either one of Claims 1 and 2, **characterised in that** it is made of a plastic material of the thermoplastic or thermosetting type which can be deformed by expansion.

4. Preform according to Claim 3, **characterised in that** it is made of a thermoplastic plastic material selected from the group consisting of polyethylene, polypropylene, polycarbonates, polymethyl methacrylate, PVC, polyurethanes, or of a thermosetting plastic material selected from the group consisting of polymethyl methacrylate and polyurethanes.

5. Preform according to any one of Claims 1 to 4, **characterised in that** it has guide means at the surface, for example bosses or hollows, which are intended to guide the operator during the cutting operation, and/or fore-holes (7) used to accommodate the lugs for fixing the functional appliance.

6. Preform according to any one of Claims 1 to 5, **characterised in that** it is made in a form which is developed flat, before being shaped by the operator.

7. Preform according to any one of the preceding claims, making it possible to obtain a Bonnet's Nocturnal Lingual Envelope, or N.L.E., after deformation.

8. Method of manufacturing a personalised orthodontic appliance or appliance for dentofacial orthopaedics, which comprises the following steps:
- producing an expansion mould (9, 10) made at least in part from the study model or models made by the practitioner from the impression or impressions taken from his or her patient,
- positioning the preform (1) according to any one of Claims 1 to 7 in the expansion mould,
- expanding the preform until it has reached the desired shape,
- mould-releasing the appliance thus obtained, which becomes functional after finishing.

9. Method according to Claim 8, **characterised in that** the expansion is carried out when hot, and **in that** the preform is heated to the deformation temperature of its constituent material before the expansion step, either before or after the step of positioning in the expansion mould.

10. Method according to Claim 9, **characterised in that** the heating to the expansion temperature is carried out by the action of radiation or a heating fluid.

11. Method according to Claim 10, **characterised in that** the radiation which is used is of the microwave or ultraviolet or infrared type.

12. Method according to any one of Claims 8 to 11, **characterised in that** the expansion is carried out by any means suitable for obtaining expansion of the preform to the desired shape.

13. Method according to Claim 12, **characterised in that** the expansion is carried out by the action of an expansion fluid or mechanically.

14. Method according to Claim 13, **characterised in that** the expansion fluid is compressed air or water.

15. Method according to any one of Claims 8 to 14, **characterised in that** the expansion is carried out by means of an expansion core (14), which is placed in the preform (1) and is inflated by the expansion fluid.

16. Method according to Claim 15, **characterised in that** the core is one with controlled expansion (16).

17. Method according to Claim 15 or 16, **characterised in that** the expansion core (14, 16) is made of a material withstanding the expansion temperature, for example an elastomeric material.

18. Method according to any one of Claims 8 to 17, **characterised in that** the preform is made of a thermosetting material, and **in that** the expansion step is accompanied simultaneously or subsequently by a step of polymerising the thermosetting material.

19. Method according to any one of Claims 8 to 18, **characterised in that** it furthermore comprises the insertion of fixing pieces or complementary pieces by overmoulding during the expansion.

20. Method according to any one of Claims 8 to 19, **characterised in that** the finishing step comprises at least one of the following actions: forming one or more openings, polishing, anchoring fixing hooks, fixing a complementary piece, removing superfluous parts, reducing the area of certain regions.

21. Method according to any one of Claims 8 to 20, **characterised in that** it comprises a step of anchoring fixing hooks at movable anchoring points.

22. Method according to any one of Claims 8 to 21, **characterised in that** the orthodontic appliance or appliance for dentofacial orthopaedics obtained by the method during a preceding cycle is used as the preform.

23. Method according to any one of Claims 8 to 22, **characterised in that** the personalised orthodontic appliance or appliance for dentofacial orthopaedics is a Bonnet's Nocturnal Lingual Envelope, or N.L.E.

24. Method according to Claim 21, **characterised in that** the fixing hooks are anchored on an orthodontic appliance or appliance for dentofacial orthopaedics, manufactured according to the method described in Claims 8 to 23, by means of a device for the supply of electrical heating energy and for stable mechanical positioning of the fixing hook to be anchored.

25. Method according to Claim 24, **characterised in that** the electrical energy is supplied either by a portable current generator, which is held by the hand of the operator and has two rigid electrical conductors, or by a gun mechanically holding a pair of rigid electrical conductors which are connected to a fixed generator by flexible conductors.

26. Method according to Claim 24 or 25, **characterised in that** the stable mechanical positioning is carried out by the ends of the electrical conductors, which have a pliers shape or a shape matched to the diameter of the wire or to the shape of the hook to be inserted, for example a fork shape.

27. Expansion core which is employed in a method according to any one of Claims 15 to 26, and which has at least one means for controlling its expansion.

28. Core according to Claim 27, **characterised in that** the means for controlling its expansion is selected from the following means, namely an increase in the thickness of its wall in certain regions and the introduction of rigid, for example metal, reinforcements into its wall.

29. Personalised orthodontic appliance or appliance for dentofacial orthopaedics, as manufactured from a preform (1) according to any one of Claims 1 to 7 by means of a method according to any one of Claims 8 to 26.

30. Orthodontic appliance or appliance for dentofacial orthopaedics according to Claim 29, **characterised in that** it constitutes a Bonnet's Nocturnal Lingual Envelope, or N.L.E.

31. Orthodontic appliance or appliance for dentofacial orthopaedics according to either one of Claims 29 and 30, **characterised in that** it has one or more fixing hooks comprising movable anchoring points.

32. Personalised orthodontic appliance or appliance for dentofacial orthopaedics according to any one of Claims 29 to 31, **characterised in that** it has one or more fixing hooks, and **in that** the fixing hooks have a branch, referred to as the return branch, which remains outside the appliance at the end of insertion.
